# EUROPEAN PATENT SPECIFICATION

(11) **EP 2 949 553 B1**
(45) Date of publication and mention of the grant of the patent: **22.08.2018**
(21) Application number: 15168254.9
(22) Date of filing: 19.05.2015
(51) Int. Cl.: B62M 3/16

(54) **ANTI-THEFT ELEMENT TRANSFORMABLE PEDAL**
IN EIN DIEBSTAHLSICHERUNGSELEMENT UMWANDELBARES PEDAL
PÉDALE TRANSFORMABLE EN ÉLÉMENT ANTIVOL

(30) Priority: 26.05.2014 ES 201430728 U
(43) Date of publication of application: 02.12.2015
(73) Proprietor: Grupo Carlos Serrano Vicario, S.L., 09001 Burgos (ES); Fernández Reyes, Emilio, 09006 Burgos (ES)
(72) Inventor: SERRANO VICARIO, Diego, 09001 Burgos (ES)
(74) Representative: Pons

(56) References cited:
- EP-A1- 2 456 657
- DE-C1- 19 614 494
- JP-A- 2005 170 363
- KR-A- 20130 066 180
- US-A1- 2007 277 569
- US-A1- 2011 309 597

## Description

### OBJECT OF THE INVENTION

The object of the present invention is a pedal transformable into an anti-theft element, being a pedal of the type used to actuate a chain- or belt-driven vehicle, for example a bicycle, and which comprises foot support surfaces and is rotarily coupled to one or both connection rods of the pedal assembly.

### BACKGROUND OF THE INVENTION

Certain anti-theft elements for bicycles and similar vehicles are known in the state of the art, comprising a chain or lock for encompassing various mechanical elements of the vehicle which have disparate movements during operation thereof. On connecting these disparate movements, the vehicle is immobilised. Likewise, the chain and/or lock may be used to tie the vehicle to a fixed element, such as urban furniture or a tree.

These anti-theft elements are independent from the vehicle, making it necessary to carry them in rear bike racks, hanging from the vehicle or from the person driving it. This, in addition to being uncomfortable or making it obligatory to install rear bike racks, may generate the loss or fall of the anti-theft element or cause injuries to the person driving the vehicle in the event of falling on top of the anti-theft element.

It is also known in the state of the art document US-2007277569 A1 that describes a combined bicycle pedal and lock that serves both as an ordinary bicycle pedal and as a means of locking the bicycle to an object which is not a part of the bicycle. It includes a pedal shaft, several main components, which carry the majority of the load applied to the pedal when riding the bicycle, a complementary locking assembly, which has a folded mode when is serving as a pedal, and mode that can be extended when is serving to lock the bicycle to a suitable object, as well as a short pedal shaft, and a locking mechanism.

In document JP2005170363 A, which shows the preamble of claim 1, it is described a theft preventive device for a bicycle. The device is structured so that a pedal of a bicycle body is used as a key to allow locking pedals and a rear wheel at one time. It comprises special pedals each equipped with a deployable segment assembly having a detachable joint which is detachable by means of a catch or lock. It also comprises a guard which protects a threaded rod from being accessible for a tool when the pedal is used for locking the bicycle. On one side of the pedal, the foot support surface is formed by a first plate and on the other side by the deployable segment.

### DESCRIPTION OF THE INVENTION

The invention comprises a pedal transformable into an anti-theft element which, in addition to fulfilling the dual function of pedal and anti-theft element, on integrating the anti-theft element in the usual constitution of the pedal, avoids the existence of additional elements in the vehicle, such as rear bike racks, chains, etc. which may cause injuries in case of accident. It also reduces costs on having elements with a dual functionality.

Therefore, the pedal of the invention is used to actuate a chain- or belt-driven vehicle, for example a bicycle, and comprises foot support surfaces on one or both sides of the pedal, and is rotarily coupled to a connection rod of the pedal assembly of the vehicle. According to the invention, it also comprises a rotary support wherein the foot support surfaces are materialised. Additionally, a deployable segment assembly having, at least, one detachable joint which is detachable by means of a lock is fixed to said rotary support. This deployable segment assembly is susceptible of adopting a deployed position, configuring a lock bracket for tethering around a fixed element and/or preventing the rotation of the pedal assembly and for preventing the theft of the vehicle or any part thereof when not in use, and another position included within the operational volume of the pedal when the vehicle is in use, understanding as such the volume of a conventional pedal.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1 shows a bicycle comprising the pedals of the invention.
Figure 2 shows the bicycle illustrated in figure 1, wherein the pedals of the invention have their deployable segment assemblies in the deployed position, configuring anti-theft elements, wherein the deployable segment assembly corresponding to the back pedal encompasses the frame and rear wheel of the bicycle, and that corresponding to the front pedal encompasses the front wheel and a fixed element.
Figure 3 shows a plan view of a variant of the pedal of the invention having two support surfaces comprising corresponding plates, wherein the deployable segment assembly is in the retracted position.
Figure 4 shows a perspective view of the variant of the pedal of the invention shown in figure 3, wherein the deployable segment assembly is in the deployed position, configuring a lock bracket.
Figure 5 shows a plan view of another variant of the pedal of the invention with a support surface that comprises a single plate, and with the deployable segment assembly retracted.
Figure 6 shows a plan view of the variant of the pedal of the invention shown in figure 5 with the deployable segment assembly in the deployed position.
Figure 7 shows a perspective view of the variant of the pedal of the invention shown in figures 5 and 6 with the deployable segment assembly in the deployed position for tethering around a fixed element.
Figure 8 shows a view of another variant of the pedal with a support surface comprising a single plate having perimeter extensions on the back thereof, with the deployable segment assembly in the deployed position.
Figure 9 shows a plan view of the variant of the pedal of the invention shown in figure 8, with the deployable segment assembly in the retracted position.
Figure 10 shows a plan view of a not claimed example of the pedal wherein one of the support surfaces comprises one of the sides of the deployable segment assembly in the retracted position.
Figure 11 shows a view of the pedal shown in figure 10 with the deployable segment assembly in an intermediate position between the deployed position and the retracted position.

### PREFERRED EMBODIMENT OF THE INVENTION

The scope of the present invention is defined by claim 1. The pedal (1) transformable into an anti-theft element forms part of a chain- or belt-driven vehicle (2), for example a bicycle, and comprises foot support surfaces (10), being rotarily coupled to a connection rod (4) of the pedal assembly (5) or to both connection rods (4) in the event that the vehicle (2) has two pedals (1).

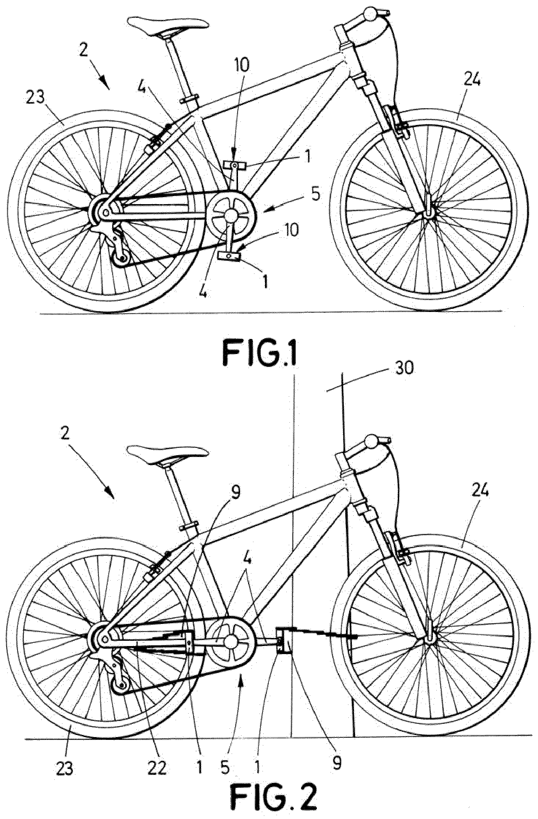

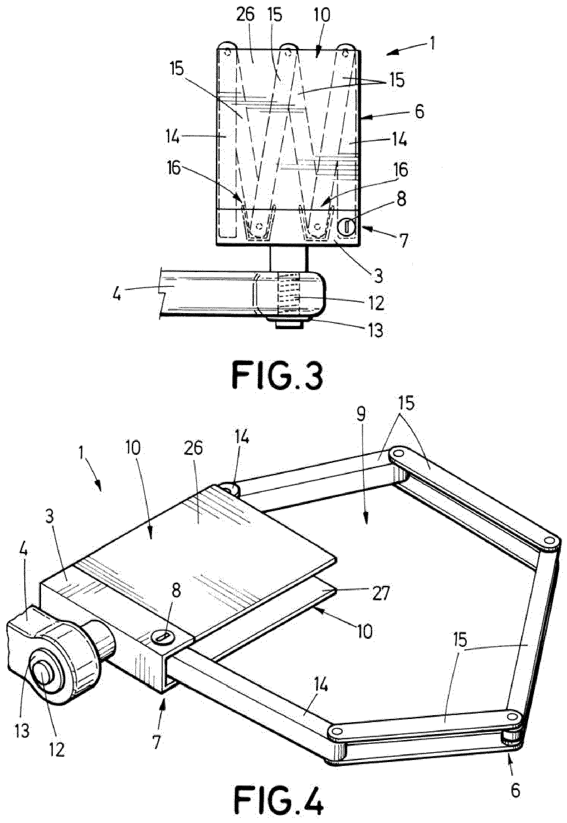

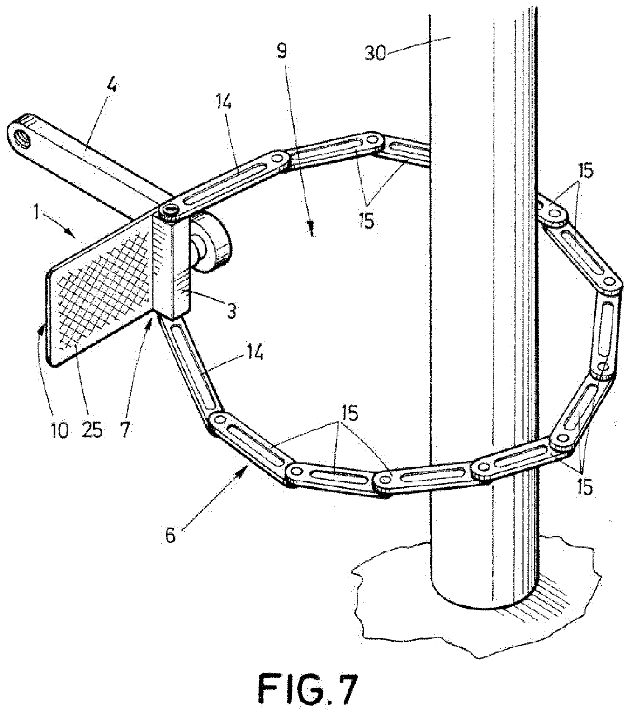

The pedal (1) comprises (see figures 3 to 11) a rotary support (3) having foot support surfaces (10) and a deployable segment (14, 15) assembly (6) fixed thereto having, at least, one detachable joint (7) detachable by means of a lock (8). This deployable segment (14, 15) assembly (6) is susceptible of adopting a deployed position configuring a lock bracket (9) for tethering around a fixed element (30) (see figures 2 and 7), and another retracted position, where it remains within the operational volume of the pedal (1).

Specifically in figure 2, it can be seen how, incorporating the two pedals of the vehicle (2) as pedals (1) of the invention, the back pedal can deploy its deployable segment (14, 15) assembly (6) so as to encompass the frame (22) and rear wheel (23) of the vehicle (2) and the front pedal to the front wheel (24) and to a fixed element (30), thereby ensuring three of the most susceptible elements to theft, which are the frame (22) and the wheels (23, 24).

In figures 1, 3, 5, 9 and 10 we can observe the retracted position of the deployable segment (14, 15) assembly (6) and that the pedal (1) is in the operating position, i.e. occupying a volume equivalent to a conventional pedal.

The rotary support (3) is rotarily coupled to a threaded rod (12) for fixing to the connection rod (4), said threaded rod (12) having inviolable fixing means which, for example, comprise an inviolable bolt (13) (actuated only by means of a special tool) disposed at the end of the threaded rod (12) on the opposite side of the connection rod itself (4), as shown in the figures. This inviolable bolt 8 (13) will have mainly anti-theft functions, as the thread of the connection rod (4) conventionally holds the threaded rod (12).

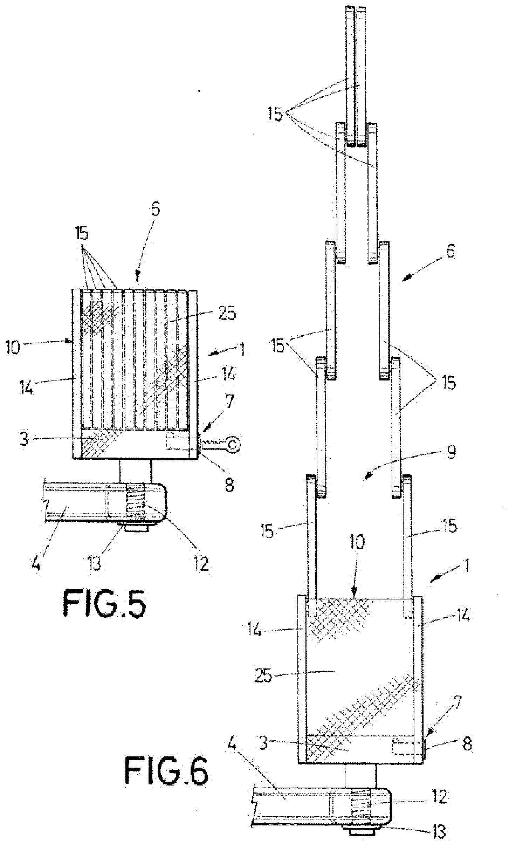

The deployable segment (14, 15) assembly (6) comprises a succession of segments (14, 15) articulated therebetween by their ends, having corresponding end segments (14) joined in a fixed or articulated manner to the rotary support (3), and intermediate segments (15). Figures 3 and 4 show a variant of the pedal (1) where the segments (14, 15) alternate a simple and double configuration similar to that of a chain drive. Figures 5 to 11 show other variants of the pedal (1) with only simple segments (14, 15). In both embodiments, the detachable joint (7) is disposed between one of the end segments (14) and the rotary support (3).

The variant of figures 5, 6 and 7 has a support surface (10) comprising a first single plate (25) disposed on a major side of the pedal (1) and the extraction of the deployable segment (14, 15) assembly (6) is performed by the part or side opposite said support surface (10). This configuration may also comprise means for maintaining the retracted position of the deployable segment (14, 15) assembly (6), for example magnetised parts (not shown) disposed on the first plate (25) in correspondence with ferromagnetic areas of the segments (14, 15), although mechanical blocks, such as for example bolts (not shown) may also participate.

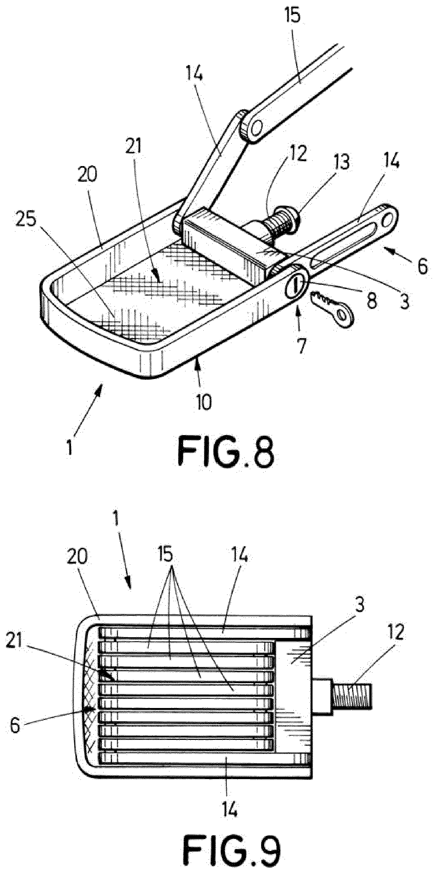

Figures 8 and 9 show another variant of the pedal (1) similar to the previous variant, wherein the first plate (25) comprises, at least, a perimeter extension (20) projecting from the back, having a thickness similar to or greater than the width of the segments (14, 15), whereupon the deployable segment (14, 15) assembly (6) remains in the retracted position disposed in the housing (21) configured by said perimeter extensions (20), said segments (14, 15) and their articulations being protected.

The distribution of masses of the pedal (1) for foregoing variants can also be configured eccentrically with respect to the threaded rod (12), so as to have an orienting torque disposed above the single support surface (10), thereby minimizing the risk of resting the foot on the segments (14, 15) in the retracted position and damaging them or their articulations.

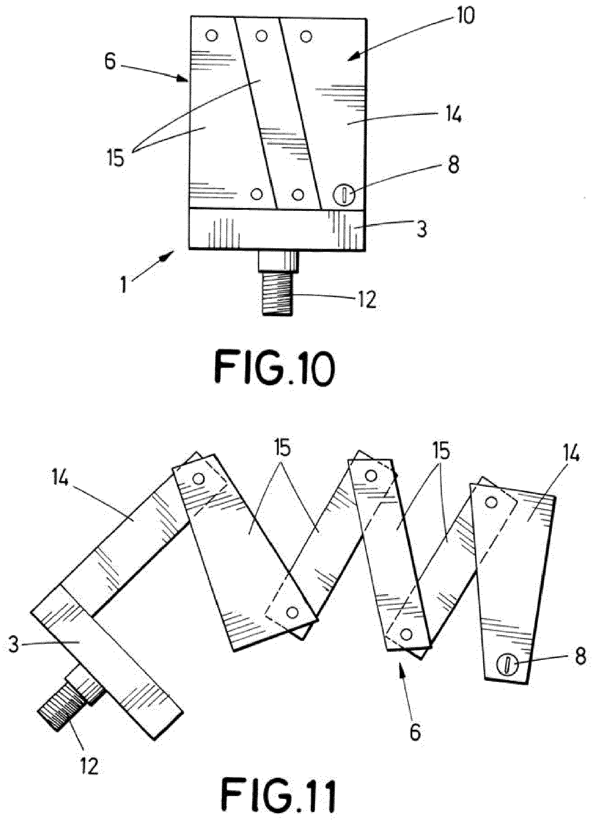

An example not forming part of the claimed subject-matter can be appreciated in figures 10 and 11. In this example, the pedal (1) can be embodied on its own or in addition to the foregoing variants comprises, at least, one of its support surfaces (10) configured comprising one of the sides of the deployable segment (14, 15) assembly (6) in the retracted position, if the segments (14, 15) and their articulations feature sufficient resistance. The pedal (1) may have a support surface (10) comprising the first plate (25) and the other support surface comprising one of the sides of the deployable segment (14, 15) assembly (6) in the retracted position, which may be laterally deployed, in this case disregarding the perimeter extensions (20) or by the side opposite the support surface configured by the first plate (25). Likewise, this pedal variant may be embodied on its own, wherein the two support surfaces (10) comprise the two sides of the deployable segment (14, 15) assembly (6) in the retracted position (see figures 10 and 11).

Another variant of the pedal (1) comprises two support surfaces (10) comprising a second plate (26) and a third plate (27) disposed on the two major sides of the pedal (1), whereamong the deployable segment (14, 15) assembly (6) is positioned, and the extraction of said deployable segment (14, 15) assembly (6) is performed through the space existing between the second plate (26) and the third plate (27). In this variant, the rotary support (3) may comprise immobilizing housings (16) of the deployed positions of the intermediate segments (15) between the second plate (26) and the third plate (27) (see figure 3).

In any case, the first plate (25), the second plate (26) and/or the third plate (27) may be complete or include reliefs or discontinuities (not shown) to improve grip, lighten the assembly and/or allow the extraction of the deployable segment (14, 15) assembly (6).

## Claims

1. A pedal (1) transformable into an anti-theft element, of the type of pedals (1) used to actuate a chain- or belt-driven vehicle (2), the pedal (1) comprising foot support surfaces (10), as well as being configured to be rotarily coupled to connection rods (4) of a pedal assembly (5) of the vehicle (2); the pedal comprising a rotary support (3) having the foot support surfaces (10), wherein a deployable segment assembly (6) is fixed to said rotary support (3), deployable segment assembly (6) having, at least, one detachable joint (7) which is detachable by means of a lock (8); the deployable segment assembly (6) being susceptible of adopting a deployed position configuring a lock bracket (9) and a retracted position included within the operational volume of the pedal (1); and the rotary support (3) is rotarily coupled to a threaded rod (12) for fixing to the connection rod (4), said threaded rod (12) having inviolable fixation means (13) for being fixed to the connection rod (4); and the support surfaces (10) comprises a first plate (25) disposed on a major side of the pedal (1); and
the pedal (1) is **characterized in that** the deployable segment assembly (6) comprises a succession of segments (14, 15) articulated therebetween by their ends, the succession of segments (14, 15) comprising:
- corresponding end segments (14) joined to the rotary support (3), and
- intermediate segments (15),
wherein the detachable joint (7) is disposed between one of the end segments (14) and the rotary support (3)

2. The pedal (1) transformable into an anti-theft element, according to claim 1, **characterized in that** the inviolable fixation means comprise an inviolable bolt (13) disposed at the end of the threaded rod (12), on the opposite side of the connection rod (4).

3. The pedal (1) transformable into an anti-theft element, according to claim 1, **characterized in that** it additionally comprises means for maintaining the retracted position of the deployable segment (14, 15) assembly (6).

4. The pedal (1) transformable into an anti-theft element, according to claim 3, **characterized in that** the means for maintaining the deployable segment (14, 15) assembly (6) in the retracted position comprise magnetized parts disposed on the first plate (25) in correspondence with ferromagnetic areas of the segments (14, 15).

5. The pedal (1) transformable into an anti-theft element, according to claims 3 or 4, **characterized in that** the means for maintaining the retracted position of the deployable segment (14, 15) assembly (6) comprises mechanical blocks.

6. The pedal (1) transformable into an anti-theft element, according to any of claims 3 to 5, **characterized in that** it comprises, at least, one perimeter extension (20) projecting from the back of the surface of the first plate (25), the extension (20) having a thickness similar to or greater than the width of the segments (14, 15), said perimeter extension (20) defining a housing (21) for receiving the deployable segment (14, 15) assembly (6) in the retracted position.

7. The pedal (1) transformable into an anti-theft element, according to any of claims 3 to 6, **characterized in that** it comprises an eccentric distribution of masses with respect to the threaded rod (12), for orienting the support surface (10) at the top.

8. The pedal (1) transformable into an anti-theft element, according to any of the preceding claims, **characterized in that** at least one of the support surfaces (10) comprises one of the sides of the deployable segment (14, 15) assembly (6) in the retracted position.

9. The pedal (1) transformable into an anti-theft element, according to any of claims 1 to 2, **characterized in that** it comprises two support surfaces (10) comprising a second plate (26) and a third plate (27) disposed on both major sides of the pedal (1), wherebetween the deployable segment (14, 15) assembly (6) is positioned.

10. The pedal (1) transformable into an anti-theft element, according to claim 9, **characterized in that** the rotary support (3) comprises immobilizing housings (16) for immobilizing the deployed positions of the intermediate segments (15) disposed between the second plate (26) and the third plate (27).

## Patentansprüche

1. Pedal (1), das in ein Diebstahlsicherungselement umwandelbar ist, der Art der Pedale (1), welche zum Betätigen eines ketten- oder riemengetriebenen Fahrzeugs (2) verwendet wird, wobei das Pedal (1) Fußstützflächen (10) umfasst und auch gestaltet ist, um drehbar an Verbindungsstangen (4) einer Pedalanordnung (5) des Fahrzeugs (2) gekoppelt zu werden; wobei das Pedal eine drehbare Stütze (3) umfasst, welche die Fußstützflächen (10) aufweist, wobei eine entfaltbare Segmentanordnung (6) an der drehbaren Stütze (3) befestigt ist, wobei die entfaltbare Segmentanordnung (6) mindestens eine lösbare Verbindung (7) aufweist, welche mittels eines Schlosses (8) lösbar ist; wobei die entfaltbare Segmentanordnung (6) durch das Gestalten einer Sperrschelle (9) eine entfaltete Position einnehmen und eine innerhalb des Betriebsvolumens des Pedals (1) enthaltene eingezogene Position einnehmen kann; und wobei die drehbare Stütze (3) drehbar an eine Gewindestange (12) zum Befestigen der Verbindungsstange (4) gekoppelt ist, wobei die Gewindestange (12) nicht aufbrechbare Befestigungsmittel (13) zum Befestigen an der Verbindungsstange (4) aufweist; und wobei die Stützflächen (10) eine erste Platte (25) umfassen, welche an einer Hauptseite des Pedals (1) angeordnet ist; und wobei das Pedal (1) **dadurch gekennzeichnet ist, dass** die entfaltbare Segmentanordnung (6) eine Folge von Segmenten (14, 15) umfasst, welche dazwischen über ihre Enden gelenkig verbunden sind, wobei die Folge von Segmenten (14, 15) Folgendes umfasst:
- entsprechende Endsegmente (14), welche mit der drehbaren Stütze (3) verbunden sind; und
- zentrale Segmente (15),
wobei die lösbare Verbindung (7) zwischen einem der Endsegmente (14) und der drehbaren Stütze (3) angeordnet ist.

2. Pedal (1), das in ein Diebstahlsicherungselement umwandelbar ist, nach Anspruch 1, **dadurch gekennzeichnet, dass** die nicht aufbrechbaren Befestigungsmittel einen nicht aufbrechbaren Bolzen (13) umfassen, welcher am Ende der Gewindestange (12) an der gegenüberliegenden Seite der Verbindungsstange (4) angeordnet ist.

3. Pedal (1), das in ein Diebstahlsicherungselement umwandelbar ist, nach Anspruch 1, **dadurch gekennzeichnet, dass** es ferner Mittel zum Beibehalten der eingezogenen Position der Anordnung (6) von entfaltbaren Segmenten (14, 15) umfasst.

4. Pedal (1), das in ein Diebstahlsicherungselement umwandelbar ist, nach Anspruch 3, **dadurch gekennzeichnet, dass** die Mittel zum Beibehalten der Anordnung (6) von entfaltbaren Segmenten (14, 15) in der eingezogenen Position magnetisierte Teile umfassen, welche auf der ersten Platte (25) in Übereinstimmung mit ferromagnetischen Bereichen der Segmente (14, 15) angeordnet sind.

5. Pedal (1), das in ein Diebstahlsicherungselement umwandelbar ist, nach einem der Ansprüche 3 oder 4, **dadurch gekennzeichnet, dass** die Mittel zum Beibehalten der eingezogenen Position der Anordnung (6) von entfaltbaren Segmenten (14, 15) mechanische Blöcke umfassen.

6. Pedal (1), das in ein Diebstahlsicherungselement umwandelbar ist, nach einem der Ansprüche 3 bis 5, **dadurch gekennzeichnet, dass** es mindestens eine von der Rückseite der Fläche der ersten Platte (25) hervorstehende Umfangserstreckung (20) umfasst, wobei die Erstreckung (20) eine Dicke aufweist, welche ähnlich der Breite bzw. größer als die Breite der Segmente (14, 15) ist, wobei die Umfangserstreckung (20) ein Gehäuse (21) zum Aufnehmen der Anordnung (6) von entfaltbaren Segmenten (14, 15) in der eingezogenen Position definiert.

7. Pedal (1), das in ein Diebstahlsicherungselement umwandelbar ist, nach einem der Ansprüche 3 bis 6, **dadurch gekennzeichnet, dass** es eine exzentrische Massenverteilung bezüglich der Gewindestange (12) zum Ausrichten der Stützfläche (10) an der Oberseite umfasst.

8. Pedal (1), das in ein Diebstahlsicherungselement umwandelbar ist, nach einem der vorhergehenden Ansprüche, **dadurch gekennzeichnet, dass** mindestens eine der Stützflächen (10) eine der Seiten der Anordnung (6) von entfaltbaren Segmenten (14, 15) in der eingezogenen Position umfasst.

9. Pedal (1), das in ein Diebstahlsicherungselement umwandelbar ist, nach einem der Ansprüche 1 bis 2, **dadurch gekennzeichnet, dass** es zwei Stützflächen (10) umfasst, welche eine zweite Platte (26) und eine dritte Platte (27) umfassen, die an beiden Hauptseiten des Pedals (1), zwischen welchen die Anordnung (6) von entfaltbaren Segmenten (14, 15) positioniert ist, angeordnet sind.

10. Pedal (1), das in ein Diebstahlsicherungselement umwandelbar ist, nach Anspruch 9, **dadurch gekennzeichnet, dass** die drehbare Stütze (3) Feststellgehäuse (16) zum Feststellen der entfalteten Positionen der zwischen der zweiten Platte (26) und der dritten Platte (27) angeordneten zentralen Segmente (15) umfasst.

## Revendications

1. Pédale (1) transformable en élément anti-vol, du type de pédales (1) utilisées pour actionner un véhicule entraîné par chaîne ou par courroie (2), la pédale (1) comprenant des surfaces de support du pied (10), et, en outre, étant configurée pour être couplée de façon rotative aux bielles (4) d'un ensemble de pédales (5) du véhicule (2) ; la pédale comprenant un support rotatif (3) ayant les surfaces de support du pied (10), dans lequel un ensemble (6) déployable de segments est fixé audit support rotatif (3), un ensemble (6) déployable de segments ayant, au moins, un joint détachable (7) qui est détachable au moyen d'un verrou (8) ; l'ensemble (6) déployable de segments étant susceptible d'adopter une position déployée configurant un support de verrouillage (9) et une position rétractée comprise dans le volume opérationnel de la pédale (1) ; et le support rotatif (3) est couplé de façon rotative à une tige filetée (12) pour la fixation à la bielle (4), ladite tige filetée (12) ayant des moyens de fixation inviolables (13) pour être fixés à la bielle (4) ; et les surfaces de support (10) comprennent une première plaque (25) disposée sur un grand côté de la pédale (1) ; et la pédale (1) est **caractérisée en ce que** l'ensemble (6) déployable de segments comprend une succession de segments (14, 15) articulés entre eux par leurs extrémités, la succession de segments (14, 15) comprenant :
- des segments d'extrémité correspondants (14) reliés au support rotatif (3), et
- des segments intermédiaires (15),
dans lesquels le joint détachable (7) est disposé entre l'un des segments d'extrémité (14) et le support rotatif (3)

2. Pédale (1) transformable en élément anti-vol, selon la revendication 1, **caractérisée en ce que** les moyens de fixation inviolables comprennent un boulon inviolable (13) disposé à l'extrémité de la tige filetée (12), sur le côté opposé de la bielle (4).

3. Pédale (1) transformable en élément anti-vol, selon la revendication 1, **caractérisée en ce qu'**elle comprend en outre des moyens pour maintenir la position rétractée de l'ensemble (6) déployable de segments (14, 15).

4. Pédale (1) transformable en élément anti-vol, selon la revendication 3, **caractérisée en ce que** les moyens pour maintenir l'ensemble (6) déployable de segments (14, 15) dans la position rétractée comprennent des parties magnétisées disposées sur la première plaque (25) en correspondance avec des zones ferromagnétiques des segments (14, 15).

5. Pédale (1) transformable en élément anti-vol, selon les revendications 3 ou 4, **caractérisée en ce que** les moyens pour maintenir la position rétractée de l'ensemble (6) déployable de segments (14, 15) comprennent des blocs mécaniques.

6. Pédale (1) transformable en élément anti-vol, selon l'une quelconque des revendications 3 à 5, **caractérisée en ce qu'**elle comprend, au moins, une extension de périmètre (20) faisant saillie de l'arrière de la surface de la première plaque (25), l'extension (20) ayant une épaisseur similaire ou supérieure à la largeur des segments (14, 15), ladite extension de périmètre (20) définissant un logement (21) pour recevoir l'ensemble (6) déployable de segments (14, 15) dans la position rétractée.

7. Pédale (1) transformable en élément anti-vol, selon l'une quelconque des revendications 3 à 6, **caractérisée en ce qu'**elle comprend une répartition excentrique de masses par rapport à la tige filetée (12), pour orienter la surface de support (10) au-dessus.

8. Pédale (1) transformable en élément anti-vol, selon l'une quelconque des revendications précédentes, **caractérisée en ce qu'**au moins l'une des surfaces de support (10) comprend l'un des côtés de l'ensemble (6) déployable (14, 15) de segments dans la position rétractée.

9. Pédale (1) transformable en élément anti-vol, selon l'une quelconque des revendications 1 à 2, **caractérisée en ce qu'**elle comprend deux surfaces de support (10)
comprenant une deuxième plaque (26) et une troisième plaque (27) disposées sur les deux grands côtés de la pédale (1), entre lesquelles l'ensemble (6) déployable de segments (14, 15) est positionné.

10. Pédale (1) transformable en élément anti-vol, selon la revendication 9, **caractérisée en ce que** le support rotatif (3) comprend des logements d'immobilisation (16) pour immobiliser les positions déployées des segments intermédiaires (15) disposés entre la deuxième plaque (26) et la troisième plaque (27).
